# EUROPÄISCHE PATENTANMELDUNG

(11) **EP 1 116 566 A1**
(43) Veröffentlichungstag der Anmeldung: **18.07.2001**
(21) Anmeldenummer: 00119878.7
(22) Anmeldetag: 13.09.2000
(51) Int. Cl.: B29C 45/17

(54) **Verfahren und Vorrichtung zur Herstellung von Spritzgiessteilen aus thermoplastischen Kunststoffen**

(30) Priorität: 14.01.2000 DE 19949539
(71) Anmelder: Battenfeld GmbH, D-58540 Meinerzhagen (DE)
(72) Erfinder: Eckardt, Helmut, 58540 Meinerzhagen (DE); Ehritt, Jürgen, 57271 Hilchenbach (DE); Wülfrath, Marc, 58566 Kierspe-Vollme (DE); Bloemeke, Christof, 59590 Geseke (DE); Hunold, Mathias, 59590 Geseke (DE); Jaroschek, Prof. Dr., 33619 Bielefeld (DE)

(57) **Zusammenfassung**

Die Erfindung bezieht sich auf ein Verfahren und eine Vorrichtung zur Herstellung von Spritzgießteilen aus thermoplastischem Kunststoff, wobei das Spritzgießteil (1) mindestens eine Zusammentreffstelle eines ersten Wandabschnittes (5) mit einem zweiten Wandabschnitt (6) aufweist bei der nach dem Einspritzen der thermoplastischen Schmelze in das Spritzgießwerkzeug zwischen eine Wandung der Kavität des Spritzgießwerkzeugs und den Kunststoff ein Fluid unter Druck eingebracht wird. Erfindungsgemäß ist vorgesehen, daß die Zusammentreffstelle des ersten und zweiten Wandabschnitts als flächiger Übergangsbereich (8) ausgeführt ist, der zumindest eine Oberflächennormale (9) aufweist, die im wesentlichen auf den Schnittpunkt (13) der Achse des ersten Wandabschnittes (5) mit der Achse des zweiten Wandabschnittes (6) oder der Außenseite des Formteils gerichtet ist und wobei das auf den Übergangsbereich wirkende Fluid eine mindestens teilweise Verschiebung des Übergangsbereiches (8) auf den Schnittpunkt (13) zu bewirkt.

## Beschreibung

Die Erfindung bezieht sich auf ein Verfahren zur Herstellung von Spritzgießteilen aus thermoplastischem Kunststoff,
wobei das Spritzgießteil mindestens eine Zusammentreffstelle eines ersten Wandabschnittes mit einem zweiten Wandabschnitt aufweist, insbesondere einen ersten Wandabschnitt der mit einem zweiten Wandabschnitt in Form einer Rippe verstärkt ist,
bei der nach dem Einspritzen der thermoplastischen Schmelze in das Spritzgießwerkzeug zwischen eine Wandung der Kavität des Spritzgießwerkzeugs und den Kunststoff ein Fluid, insbesondere Gas, unter Druck eingebracht wird.

Weiterhin betrifft die Erfindung eine Vorrichtung zur Herstellung von Spritzgießteilen aus thermoplastischem Kunststoff sowie die damit hergestellten Formteile.

Verfahren der eingangs beschriebenen Art sind bereits aus dem Stand der Technik bekannt. Die **EP 592 525** beschreibt beispielsweise ein Verfahren zur Herstellung von Spritzgießteilen aus thermoplastischem Kunststoff, wobei Gas nach dem Einspritzen der Schmelze zwischen eine Werkzeugkavität und die Kunststoffschmelze eingespritzt wird, wobei bedingt durch den Gasdruck die Schmelze an die gegenüberliegende Seite der Werkzeugkavität gepreßt wird und somit Einfallstellen vermieden werden. Um zu erreichen, daß das Gas exakt geführt und damit an vorherbestimmte Bereiche gelangt, wird die Oberfläche des Werkzeuges mit einer Struktur versehen, die dann als Gaskanäle wirkt.

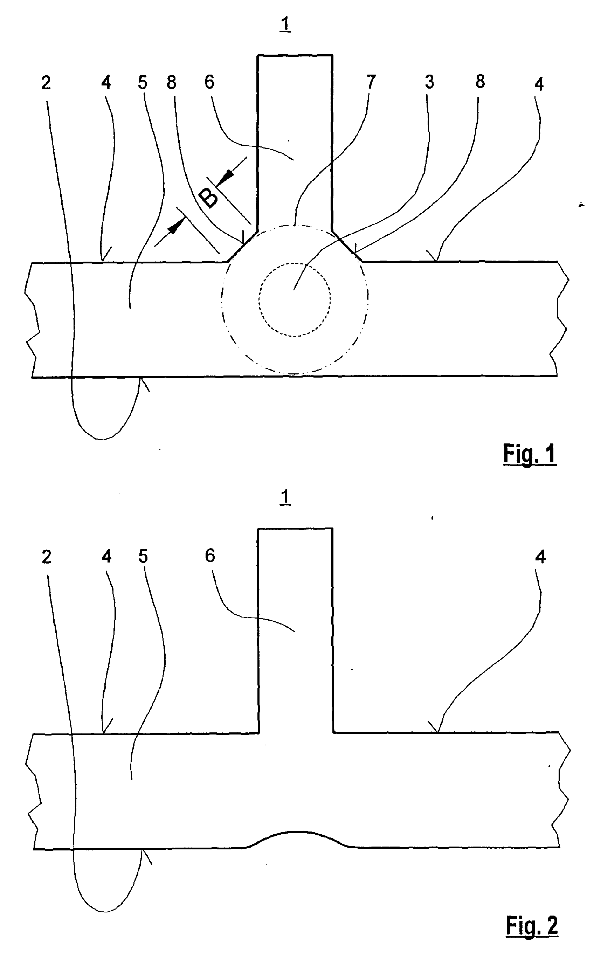

Durchgeführte Versuche gemäß dem in der EP 592 525 beschriebenen Verfahren haben gezeigt, daß in Bereichen, in denen das Formteil verrippt ist, dennoch oft weiterhin Einfallstellen zu verzeichnen sind. Bereits unmittelbar nach der Füllung des Formnestes bildet sich infolge der Temperaturdifferenz zwischen der heißen Schmelze und des kalten Werkzeuges eine dünne Außenhaut. Die Dicke hängt vom Rohstoff, von den Verarbeitungsbedingungen und von der Kühlsituation ab. Diese dünne Haut hat in flächigen Bereichen noch keine große Festigkeit, sofern im Innern des Formteils sich noch schmelzflüssiges Material befindet. In den Eckbereichen dagegen, setzt die dünne Haut durch die geometrische Ausbildung, beispielsweise einer Abwinkelung von 90°, einer Verformung einen größeren Widerstand entgegen. In Figur 2 ist dieser Effekt verdeutlicht. Es ist zu beobachten, daß trotz gleichmäßigem Druckaufbau auf der verrippten Seite des Formteils gegenüber der Rippe eine Einfallstelle auftritt. Da zudem auf der verrippten Seite der Kunststoff in der Schwindung behindert ist, bzw. durch die Kontur ein freies Schwinden nicht möglich ist, wird der Schwindungsausgleich durch Einfall der gegenüberliegenden Seite aufgefangen. Genau dies ist unerwünscht, erstrebt ist es, gerade gegenüber der Rippe Einfallstellen zu vermeiden. In Übergangsbereichen mit mittlerer bis hoher Wandstärkenanhäufung entstehen derartige Einfallstellen besonders stark.

Der Erfindung liegt daher die **Aufgabe** zugrunde, ein Verfahren und eine dazugehörige Vorrichtung sowie das Formteil zu schaffen, bei dem Einfallstellen in Bereichen mit Wandstärkenanhäufung vermieden werden.

Die **Lösung** der Aufgabe durch die Erfindung ist dadurch gekennzeichnet, daß
daß die Zusammentreffstelle des ersten und zweiten Wandabschnitts als flächiger Übergangsbereich (8) ausgeführt ist, der zumindest eine Oberflächennormale (9) aufweist, die im wesentlichen auf den Schnittpunkt (13) der Achse des ersten Wandabschnittes (5) mit der Achse des zweiten Wandabschnittes (6), bzw. auf den Schnittpunkt (12) der Mittelachse (11) eines zweiten Wandabschnittes (6) mit der Außenseite (2) des Formteils gerichtet ist,
wobei das auf den Übergangsbereich (8) wirkende Fluid eine mindestens teilweise Verschiebung des Übergangsbereiches (8) auf den Schnittpunkt (13, 12) zu bewirkt.

Hierdurch wird erreicht, daß die besonders stark zu Schwindungen neigende Bereiche der Wanddickenanhäufung (7), also Bereiche, wo Rippen oder andere formteilbedingte Erhöhungen an eine Grundwandstärke angebunden sind, bis zur Erstarrung der Schmelze nicht nur unter Druck gehalten werden, sondern auch Material in diese Bereiche nachgedrückt wird und somit das Auftreten von Einfallstellen auf der Außenseite (2) des Formteils (1) verhindert wird, wobei als Fluid sowohl gasförmige als auch flüssige Medien Verwendung finden. Es wird also bewußt auf die schulmäßige Lehre, Materialanhäufung, beispielsweise bei Rippenanbindungen durch kleine Radien, zu vermeiden, verzichtet, um zu erreichen, daß das Fluid Kunststoffmasse in bzw. aus der Kernzone (3) verdrängen kann.

Es wird damit ebenfalls erreicht, daß der Übergangsbereich (8) in der Weise gestaltet werden muß, daß die senkrecht auf die mit Fluid beaufschlagte Seite des Formteils treffenden Kraftkomponenten des Fluids den Übergangsbereich verformen können und die Außenseite (2), auch im Bereich des Schnittpunktes (12), gegen die Werkzeugwandung drückt und somit die Einfallstelle vermieden wird.

Weiterbildungsgemäß ist vorgesehen, daß die Kunststoffschmelze im Bereich der Wanddickenanhäufung (7) im plastischen Zustand gehalten wird, bis eine ausreichende Menge Kunststoff in der Kernzone (3) der Wanddickenanhäufung (7) verschoben ist. Es wird damit das Nachdrükken des Materials in der Kernzone (3) erleichtert, da ein frühzeitiges Erstarren der Randzonen der thermoplastischen Schmelze, bedingt durch relativ kalte Werkzeugwandungen, unterbunden wird. Besonders vorteilhaft ist es, wenn der Bereich mit Wanddickenanhäufungen (7) in einem Temperaturbereich von 40°C bis 120°C gehalten wird.

Schließlich ist fortbildungsgemäß vorgesehen, daß zum Temperieren des Bereiches der Wanddickenanhäufung (7) ein temperiertes Fluid eingegeben wird.

Vorteilhafterweise wird der Druck des eingebrachten Fluids kontrolliert und/oder geregelt, dies kann auch nur zeitweise geschehen. Bringt man beispielsweise das Fluid mittels eines Druckprofils ein, kann der gewünschte Effekt zusätzlich verstärkt werden, da der Anfangsdruck sehr hoch und der Haltedruck beispielsweise niedriger sein kann. Es wird also in diesem Fall ein schockartiger Druck auf die Innenseite des Formteils gebracht.

Bei der dazugehörigen Vorrichtung ist vorgesehen, daß
die Zusammentreffstelle des ersten und zweiten Wandabschnitts als flächiger Übergangsbereich (8) ausgeführt ist, der zumindest eine Oberflächennormale (9) aufweist, die im wesentlichen auf den Schnittpunkt (13) der Achse des ersten Wandabschnittes (5) mit der Achse des zweiten Wandabschnittes (6), bzw. auf den Schnittpunkt (12) der Mittelachse (11) eines zweiten Wandabschnittes (6) mit der Außenseite (2) des Formteils gerichtet ist.

Es wird hiermit sichergestellt, daß durch die geometrische Ausgestaltung des Bereiches mit Wanddickenanhäufungen (7) der Druck des Fluids eine Verschiebung der thermoplastischen Schmelze in der Kernzone (3) bewirken kann. Hierbei ist es vorgesehen, daß der Übergang von einer Grundwandstärke (d₁, d₂) in die Wandstärkenanhäufüng (7) stetig erfolgt, also nicht abrupt, wie bei einer Anbindung von beispielsweise 90°. Es ist somit vorteilhaft, den Übergangsbereich (8) in Form eines Winkels zwischen der ersten Wand (5) und der zweiten Wand (6) auszuführen, wobei der Winkel zwischen 10° und 80°, vorzugsweise bei 45° liegt. Es ist aber auch denkbar, den Übergangsbereich (8) als Kurve zwischen der ersten Wand (5) und der zweiten Wand (6) auszuführen, wobei die Kurve beispielsweise ein Bogen mit einem Radius zwischen r=d₁ und r=d₂ ist. Die Breite des Übergangsbereichs (8) ist in einem Bereich von 20-150% , vorzugsweise auch 40-80%, der Dicke (d₁, d₂) der beiden Wandabschnitte ausgeführt.

Als vorteilhafte Weiterbildung ist vorgesehen, den Bereich mit Wanddickenanhäufung (7) mit Mitteln zu temperieren. Als Mittel ist beispielsweise vorgesehen, Heizelemente oder Mittel zur Eingabe von Fluid einzusetzen.

Beim dazugehörigen Formteil ist erfindungsgemäß vorgesehen, daß
die Zusammentreffstelle des ersten und des zweiten Wandabschnittes als flächiger Übergangsbereich (8) ausgebildet ist, der zumindest teilweise eine Oberflächennormale (9) aufweist, die im wesentlichen auf den Schnittpunkt (13) der Achse des ersten Wandabschnittes (5) mit der Achse des zweiten Wandabschnittes (6), bzw. auf den Schnittpunkt (12) der Mittelachse (11) eines zweiten Wandabschnittes (6) mit der Außenseite (2) des Formteils gerichtet ist.

Das Formteil wird somit in den Bereichen mit Wanddickenanhäufungen(7) bewußt derart ausgestaltet, daß das eingebrachte Fluid thermoplastische Schmelze aus dem Übergangsbereich (8) in der Kernzone (3) der Wanddickenanhäufung (7) pressen kann, der Konturverlust im Übergangsbereich (8) wird dabei bewußt in Kauf genommen.

Die vorliegende Erfindung ermöglicht es somit, Spritzgießteile aus thermoplastischen Kunststoffen herzustellen, die frei von Einfallstellen sind, wobei hierfür keine aufwendigen Vorrichtungen oder komplizierte Verfahren zum Einsatz gelangen.

In den Zeichnungen sind schematisch Ausführungsbeispiele der Erfindung aufgezeigt. Es ist in
- Fig. 1: ein Formteilausschnitt in einer Ausführungsvariante dargestellt, in
- Fig. 2: wird die Ausgestaltung eines Formteils dargestellt, die den Stand der Technik widerspiegelt, und in den
- Fig. 3: bis 9 werden beispielhaft weitere Ausführungen der Erfindung als Formteilausschnitte gezeigt, und
- Fig. 10: die Wirkungslinien der Kraftkomponenten des Fluids.

Figur 1 zeigt einen Teilschnitt durch das Formteil 1 mit der Außenkontur 2, die beispielsweise die Sichtseite des Fertigteiles ist und die Innenseite 4 des Formteils 1, die im Herstellungsprozeß mit Fluid beaufschlagt wird. An diese Basiswandung 5 des Formteils 1 ist eine zweite Wand 6 als Verrippung angebunden. An der Verbindungsstelle entsteht eine Wanddickenanhäufung 7, die durch den strichpunktierten Kreis verdeutlicht ist. Bei herkömmlichen Verfahren neigt die Fläche 2 im Bereich gegenüber der Wand 6 zu Einfallstellen, wie in Figur 2 dargestellt. Durch die Anbindung der Wand 6 gemäß dem hier ausgeführten Übergangsbereich 8, mit der Breite B, der beispielhaft im Winkel von 45° zwischen der Wand 5 und der Wand 6 ausgeführt ist, wird es ermöglicht, daß bereits zum Teil erstarrte Haut so verschoben werden kann, daß Schmelze von der Kernzone 3 zum Bereich gegenüber der Wand 6 gepreßt wird und die Randzone deformiert werden kann, also gegen die Werzeugkavität gedrückt wird, es entsteht eine Art Membran-Effekt.

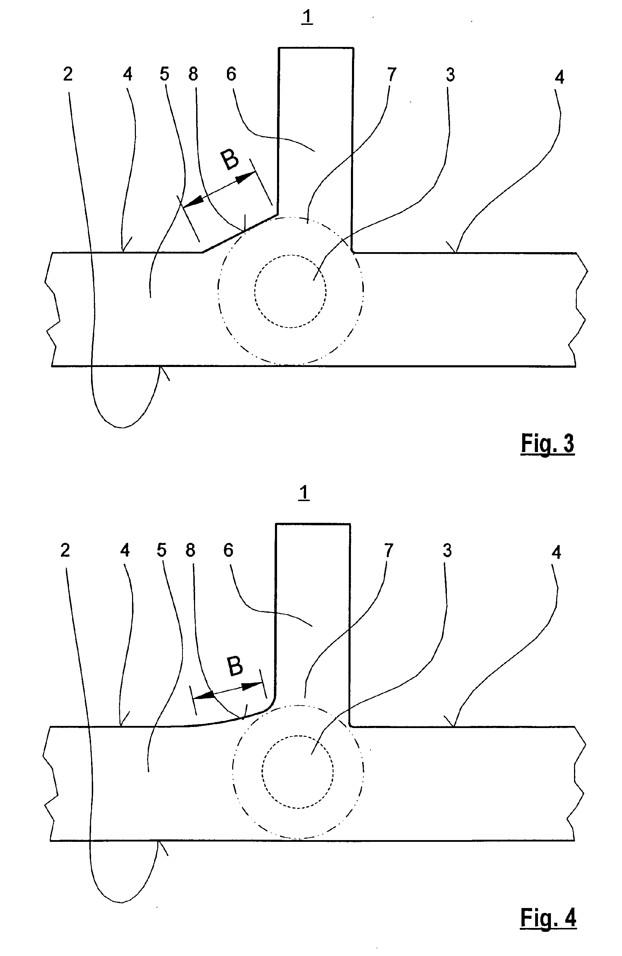

Figur 3 zeigt ein Ausführungsbeispiel, bei dem nur ein Übergangsbereich 8, mit der Breite B, von der ersten Wand 5 zur zweiten Wand 6 ausgeführt ist. Dies kann bei einigen Formteilgeometrien bereits den gewünschten Effekt erzielen. Weiterhin ist hier der Übergangsbereich 8 von der Wand 5 allmählich zur Wand 6 ansteigend ausgeführt. Durch diese besonders breite Ausgestaltung des Übergangsbereiches 8 wird der Membran-Effekt zusätzlich verstärkt. In Figur 4 wird eine Ausführungsvariante mit Ausgestaltung des Übergangsbereiches 8, mit der Breite B, als Kurve dargestellt, bei der der oben beschriebene Effekt ebenfalls zu verzeichnen ist.

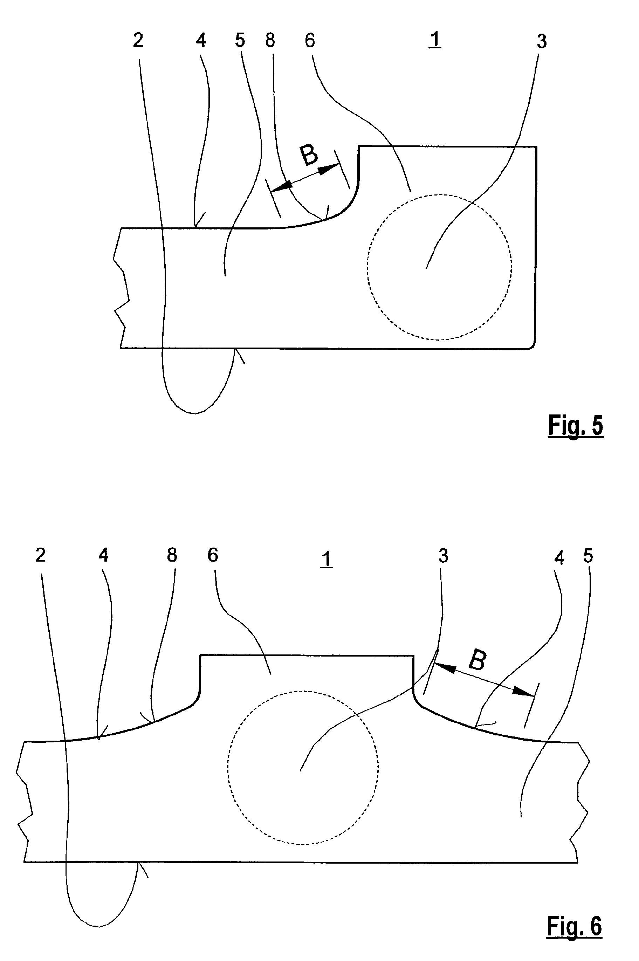

In Figur 5 und 6 ist eine weitere Formteilgeometrie dargestellt, die eine wesentlich breitere Ausführung der Wand 6 zeigt. Auch hier wird durch entsprechende Ausgestaltung des Übergangsbereiches 8, mit der Breite B, der gewünschte Effekt erreicht. Es ist dabei unerheblich, ob der Übergangsbereich 8 als eine Gerade in einem bestimmten Winkel, wie in Figur 5, oder als Kurve wie in Figur 6 ausgeführt ist.

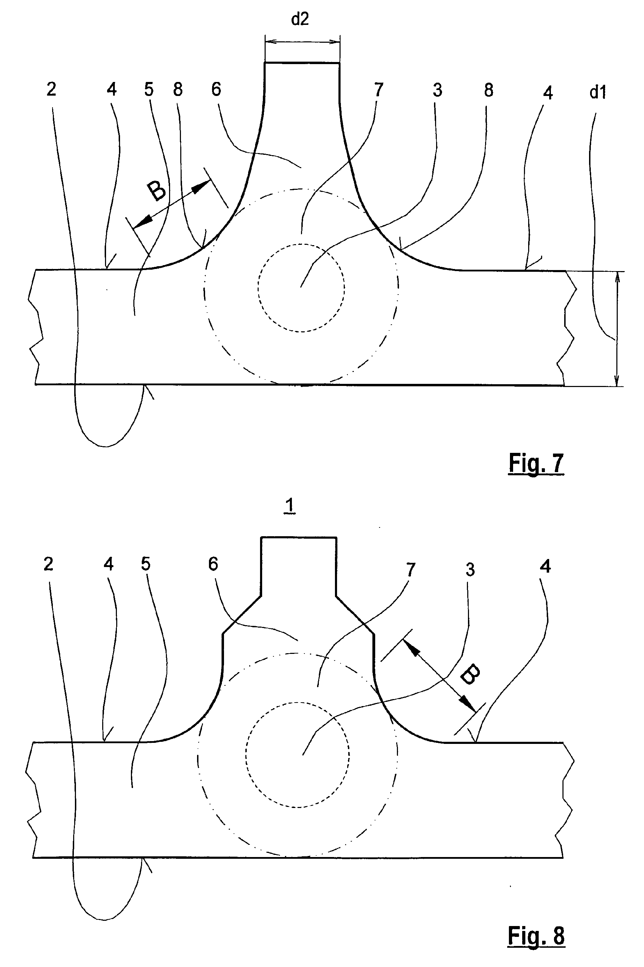

Die Figuren 7 bis 9 zeigen noch weitere mögliche Ausführungen des Übergangsbereiches 8 bei unterschiedlichen Ausführungen der Wand 6.

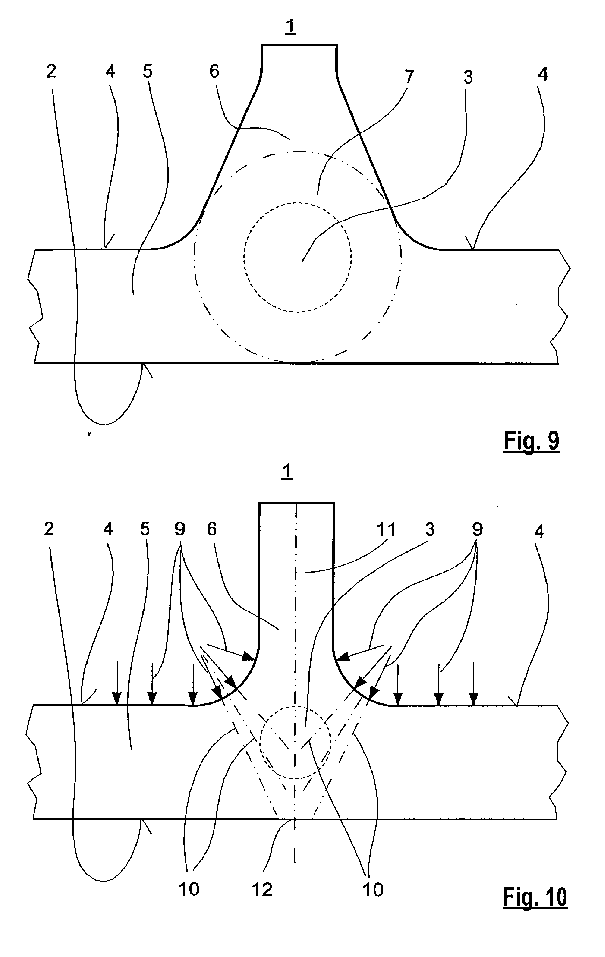

In Figur 10 sind die Kraftkomponenten 9 des Fluids beispielhaft dargestellt, wie diese auf die vom Fluid beaufschlagte Seite 4 des Formteil 1 wirken. Ein Teil der Wirkungslinien 10 der Kraftkomponenten 9 treffen auf den Bereich um den Schnittpunkt 12 der zwischen der Mittelachse 11 beispielsweise einer Rippe 6 und der Außenwand 2 des Formteils 1 entsteht. Hierdurch ist gewährleistet, daß die Kraftkomponenten 9 es ermöglichen, Material aus der Kernzone 3 in Richtung des Schnittpunktes 12 zu verdrängen und somit die Einfallstelle gegenüber der Wand 6 zu verhindern.

Es ist somit möglich, den gewünschten Verschiebeeffekt der Schmelze aus der Kernzone 3 der Wanddickenanhäufung 7 in den Bereich gegenüber einer Wand 6 bei jeglicher Ausgestaltung der Wand 6 zu erreichen.

### Bezugszeichenliste:

- 1: Formteil
- 2: Außenseite des Formteiles 1
- 3: Kernzone der Wanddickenanhäufung
- 4: vom Fluid beaufschlagte Seite des Formteils 1
- 5: erste Wand des Formteiles 1
- 6: zweite Wand des Formteiles 1
- 7: Wanddickenanhäufung im Formteil 1
- 8: Übergangsbereich von Wand 5 in Wand 6
- 9: Kraftkomponente des Fluids
- 10: Wirkungslinie der Kraftkomponente 9
- 11: Mittelachse einer Wand 6
- 12: Schnittpunkt der Mittelachse 11 mit der Außenseite 2
- 13: Schnittpunkt der Mittelachse 11 mit der Mittelachse der Wand 5

- B: Breite des Übergangsbereiches 8
- d₁: Dicke der Wand 5
- d₂: Dicke der Wand 6

## Patentansprüche

1. Verfahren zur Herstellung von Spritzgießteilen aus thermoplastischem Kunststoff,
wobei das Spritzgießteil (1) mindestens eine Zusammentreffstelle eines ersten Wandabschnittes (5) mit einem zweiten Wandabschnitt (6) aufweist, insbesondere einen ersten Wandabschnitt der mit einem zweiten Wandabschnitt in Form einer Rippe verstärkt ist,
bei der nach dem Einspritzen der thermoplastischen Schmelze in das Spritzgießwerkzeug zwischen eine Wandung der Kavität des Spritzgießwerkzeugs und den Kunststoff ein Fluid, insbesondere Gas, unter Druck eingebracht wird,
**dadurch gekennzeichnet,**
daß die Zusammentreffstelle des ersten und zweiten Wandabschnitts als flächiger Übergangsbereich (8) ausgeführt ist, der zumindest eine Oberflächennormale (9) aufweist, die im wesentlichen auf den Schnittpunkt (13) der Achse des ersten Wandabschnittes (5) mit der Achse des zweiten Wandabschnittes (6) gerichtet ist,
wobei das auf den Übergangsbereich (8) wirkende Fluid eine mindestens teilweise Verschiebung des Übergangsbereiches (8) auf den Schnittpunkt (13) zu bewirkt.

2. Verfahren zur Herstellung von Spritzgießteilen aus thermoplastischem Kunststoff,
wobei das Spritzgießteil (1) mindestens eine Zusammentreffstelle eines ersten Wandabschnittes (5) mit einem zweiten Wandabschnitt (6) aufweist, insbesondere einen ersten Wandabschnitt der mit einem zweiten Wandabschnitt in Form einer Rippe verstärkt ist,
bei der nach dem Einspritzen der thermoplastischen Schmelze in das Spritzgießwerkzeug zwischen eine Wandung der Kavität des Spritzgießwerkzeugs und den Kunststoff ein Fluid, insbesondere Gas, unter Druck eingebracht wird,
**dadurch gekennzeichnet,**
daß die Zusammentreffstelle des ersten und zweiten Wandabschnitts als flächiger Übergangsbereich (8) ausgeführt ist, der zumindest eine Oberflächennormale (9) aufweist, die im wesentlichen auf den Schnittpunkt (12) der Mittelachse (11) eines zweiten Wandabschnittes (6) mit der Außenseite (2) des Formteils gerichtet ist,
wobei das auf den Übergangsbereich (8) wirkende Fluid eine mindestens teilweise Verschiebung des Übergangsbereiches (8) auf den Schnittpunkt (12) zu bewirkt.

3. Verfahren nach Anspruch 1 oder 2, dadurch gekennzeichnet, daß die Kunststoffschmelze im Bereich unter dem Übergangsbereich liegenden Wanddickenanhäufung (7) im plastischen Zustand gehalten wird, bis eine ausreichende Menge Kunststoff in einer Kernzone (3) der Wanddickenanhäufung (7) verschoben ist.

4. Verfahren nach Anspruch 3, dadurch gekennzeichnet, daß der Bereich einer Wanddickenanhäufung (7) in einem Temperaturbereich von 40°C bis 120°C gehalten wird, bis eine ausreichende Menge Kunststoff in der Kernzone (3) der Wanddickenanhäufung (7) verschoben ist.

5. Verfahren nach Anspruch 3 oder 4, dadurch gekennzeichnet, daß zum Temperieren des Bereiches der Wanddickenanhäufung (7) ein temperiertes Fluid eingegeben wird.

6. Verfahren nach einem oder mehreren der vorherigen Ansprüche, dadurch gekennzeichnet, daß der Druck des Fluids zumindest zeitweise kontrolliert und/oder geregelt wird.

7. Verfahren nach Anspruch 6, dadurch gekennzeichnet, daß der Druck des Fluids mittels eines vorgegebenen Druckprofils geregelt wird.

8. Vorrichtung zur Herstellung von Formteilen (1) aus thermoplastischem Kunststoff, die mit Mitteln zur Eingabe von Fluid zwischen die Wandung der Kavität des Spritzgießwerkzeugs und des Kunststoffs ausgestattet ist,
wobei die Mittel zur Eingabe des Fluids auf der Seite der Werkzeugkavität angebracht sind, die der Formteilaußenseite (2) gegenüberliegt,
wobei das Spritzgießwerkzeug mindestens eine Zusammentreffstelle eines ersten Wandabschnittes (5) mit einem zweiten Wandabschnitt (6), insbesondere einen ersten Wandabschnitt der mit einem zweiten Wandabschnitt in Form einer Rippe verstärkt ist, aufweist,
**dadurch gekennzeichnet,**
daß die Zusammentreffstelle des ersten und zweiten Wandabschnitts als flächiger Übergangsbereich (8) ausgeführt ist, der zumindest eine Oberflächennormale (9) aufweist, die im wesentlichen auf den Schnittpunkt (13) der Achse des ersten Wandabschnittes (5) mit der Achse des zweiten Wandabschnittes (6) gerichtet ist.

9. Vorrichtung zur Herstellung von Formteilen (1) aus thermoplastischem Kunststoff, die mit Mitteln zur Eingabe von Fluid zwischen die Wandung der Kavität des Spritzgießwerkzeugs und des Kunststoffs ausgestattet ist,
wobei die Mittel zur Eingabe des Fluids auf der Seite der Werkzeugkavität angebracht sind, die der Formteilaußenseite (2) gegenüberliegt,
wobei das Spritzgießwerkzeug mindestens eine Zusammentreffstelle eines ersten Wandabschnittes (5) mit einem zweiten Wandabschnitt (6), insbesondere einen ersten Wandabschnitt der mit einem zweiten Wandabschnitt in Form einer Rippe verstärkt ist, aufweist,
**dadurch gekennzeichnet,**
daß die Zusammentreffstelle des ersten und zweiten Wandabschnitts als flächiger Übergangsbereich (8) ausgeführt ist, der zumindest eine Oberflächennormale (9) aufweist, die im wesentlichen auf den Schnittpunkt (12) der Mittelachse (11) eines zweiten Wandabschnittes (6) mit der Außenseite (2) des Formteils gerichtet ist.

10. Vorrichtung nach Anspruch 8 oder 9, dadurch gekennzeichnet, daß der Übergangsbereich (8) von einer Wand (5) zu einer anderen Wand (6) stetig ausgebildet ist.

11. Vorrichtung nach Anspruch 8 oder 9, dadurch gekennzeichnet, daß der Übergangsbereich (8) als Kurve zwischen der ersten Wand (5) und der zweiten Wand (6) ausgeführt ist.

12. Vorrichtung nach Anspruch 8 oder 9, dadurch gekennzeichnet, daß der Übergangsbereich (8) als Winkel zwischen der ersten Wand (5) und der zweiten Wand (6) ausgeführt ist, wobei der Winkel zwischen 10° und 80°, vorzugsweise bei 45° liegt.

13. Vorrichtung nach einem oder mehreren der Ansprüche 8 bis 12, dadurch gekennzeichnet, daß im Bereich mit Wanddickenanhäufung (7) Mitteln zur Temperierung angeordnet sind.

14. Vorrichtung nach Anspruch 13, dadurch gekennzeichnet, daß die Mittel zur Temperierung der Wanddickenanhäufung (7) Heizelemente sind.

15. Vorrichtung nach Anspruch 13, dadurch gekennzeichnet, daß die Mittel zur Temperierung der Wanddickenanhäufung (7) Mittel zur Eingabe von Fluid sind.

16. Vorrichtung nach einem der Ansprüche 8-15, dadurch gekennzeichnet, daß die Breite (B) des Übergangsbereiches (8) im Bereich von 20-150%, vorzugsweise auch 40-80%, der Dicke einer der beiden Wandabschnitte beträgt.

17. Formteil bestehend aus thermoplastischem Kunststoff, daß mindestens eine Zusammentreffstelle eines ersten Wandabschnittes (5) mit einem zweitem Wandabschnitt (6) aufweist, insbesondere einen ersten Wandabschnitt der mit einem zweiten Wandabschnitt in Form einer Rippe verstärkt ist,
**dadurch gekennzeichnet,**
daß die Zusammentreffstelle des ersten und des zweiten Wandabschnittes als flächiger Übergangsbereich (8) ausgebildet ist, der zumindest teilweise eine Oberflächennormale (9) aufweist, die im wesentlichen auf den Schnittpunkt (13) der Achse des ersten Wandabschnittes (5) mit der Achse des zweiten Wandabschnittes (6) gerichtet ist.

18. Formteil bestehend aus thermoplastischem Kunststoff, daß mindestens eine Zusammentreffstelle eines ersten Wandabschnittes (5) mit einem zweitem Wandabschnitt (6) aufweist, insbesondere einen ersten Wandabschnitt der mit einem zweiten Wandabschnitt in Form einer Rippe verstärkt ist,
**dadurch gekennzeichnet,**
daß die Zusammentreffstelle des ersten und des zweiten Wandabschnittes als flächiger Übergangsbereich (8) ausgebildet ist, der zumindest teilweise eine Oberflächennormale (9) aufweist, die im wesentlichen auf den Schnittpunkt (12) der Mittelachse (11) eines zweiten Wandabschnittes (6) mit der Außenseite (2) des Formteils gerichtet ist.

19. Formteil nach Anspruch 17 oder 18, dadurch gekennzeichnet, daß der Bereich mit Wanddickenanhäufung (7) mit einem Übergangsbereich (8) versehen ist.

20. Formteil nach Anspruch 19, dadurch gekennzeichnet, daß der Übergangsbereich (8) als Kurve zwischen der ersten Wand (5) und der zweiten Wand (6) ausgeführt ist.

21. Formteil nach Anspruch 19, dadurch gekennzeichnet, daß der Übergangsbereich als Winkel zwischen der ersten Wand (5) und der zweiten Wand (6) ausgeführt ist, wobei der Winkel zwischen 10° und 80°, vorzugsweise bei 45° liegt.
